# EUROPÄISCHE PATENTSCHRIFT

(11) **EP 1 990 882 B1**
(45) Veröffentlichungstag und Bekanntmachung des Hinweises auf die Patenterteilung: **17.08.2011**
(21) Anmeldenummer: 07025061.8
(22) Anmeldetag: 22.12.2007
(51) Int. Cl.: H02G 3/18

(54) **Elektrisches/elektronisches Installationsgerät**
Electric/electronic device for generating colour depictions
Dispositif électrique/électronique destiné à la production de représentations colorées

(30) Priorität: 09.05.2007 DE 102007021636
(43) Veröffentlichungstag der Anmeldung: 12.11.2008
(73) Patentinhaber: Insta Elektro GmbH, 58509 Lüdenscheid (DE)
(72) Erfinder: Viezens, Wolfgang, 58511 Lüdenscheid (DE)

(56) Entgegenhaltungen:
- DE-A1- 1 790 297
- DE-A1- 4 028 766
- DE-U1- 20 013 233

## Beschreibung

Die vorliegende Erfindung geht von einem gemäß Oberbegriff des Hauptanspruches konzipierten elektrischen/elektronischen Installationsgerät für die Gebäudesystemtechnik aus.

Derartige elektrische/elektronische Installationsgeräte sind in der Regel dafür vorgesehen, in sogenannte Installationsdosen montiert zu werden. Damit auf einfache Art und Weise eine zuverlässige Befestigung der elektrischen/elektronischen Installationsgeräte gewährleistet ist, sind diese mit sogenannten Einspreizkrallen ausgerüstet, welche über Einspreizschrauben betrieben werden.

Durch die DE 40 28 766 C2 ist ein dem Oberbegriff des Hauptanspruches entsprechendes elektrisches/elektronisches Installationsgerät bekannt geworden. Dieses elektrische/elektronische Installationsgerät weist ein aus Kunststoff bestehendes, zur Aufnahme von Funktionselementen vorgesehenes Gehäuse bzw. Sockelteil auf, an welchem ein als Tragring ausgebildeter Träger und eine Befestigungseinrichtung festgelegt ist, welche zwei Einspreizkrallen sowie diesen zugeordnete Einspreizschrauben aufweist. Zur Aufnahme der Einspreizkrallen und der Einspreizschrauben sind zwei Ausnehmungen im Gehäuse bzw. im Sockel vorhanden. Bei einer derartigen Ausbildung kann es jedoch beim Befestigen des elektrischen/elektronischen Installationsgerätes wegen der ungünstigen Krafteinleitung der Einspreizkrallen zu Beschädigungen bzw. zu nicht ausreichend hohen Auszugskräften für das elektrische/elektronische Installationsgerät kommen.

Ausgehend von einem derart ausgebildeten elektrischen/elektronischen Installationsgerät liegt der vorliegenden Erfindung die Aufgabe zugrunde, ein elektrisches/elektronisches Installationsgerät zu schaffen, bei welchem die durch das Befestigen des elektrischen/elektronischen Installationsgerätes verursachte Krafteinleitung der Einspreizkrallen großflächig an die Bereiche des Gehäuses abgeleitet wird, welche dafür in einem besonderen Maße geeignet sind, wodurch die Realisierung besonders hoher Auszugskräfte für das elektrische/elektronische Installationsgerät gewährleistet ist.

Erfindungsgemäß wird diese Aufgabe durch die im Hauptanspruch angegebenen Merkmale gelöst.

Bei einer solchen Ausbildung ist besonders vorteilhaft, dass das die Krafteinleitung übernehmende Halteelement nicht nur besonders kostengünstig herstellbar ist, sondern darüber hinaus auf besonders einfache Art und Weise am Gehäuse festgelegt werden kann. Zudem ist besonders vorteilhaft, wenn die T-förmigen Halteelemente an Bereichen des Gehäuses zur Anlage kommen, die besonders stabil, z. B. durch die geschickte Anordnung einer Leiterplatte ausgeführt sind, damit eine optimale Krafteinleitung gewährleistet ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:

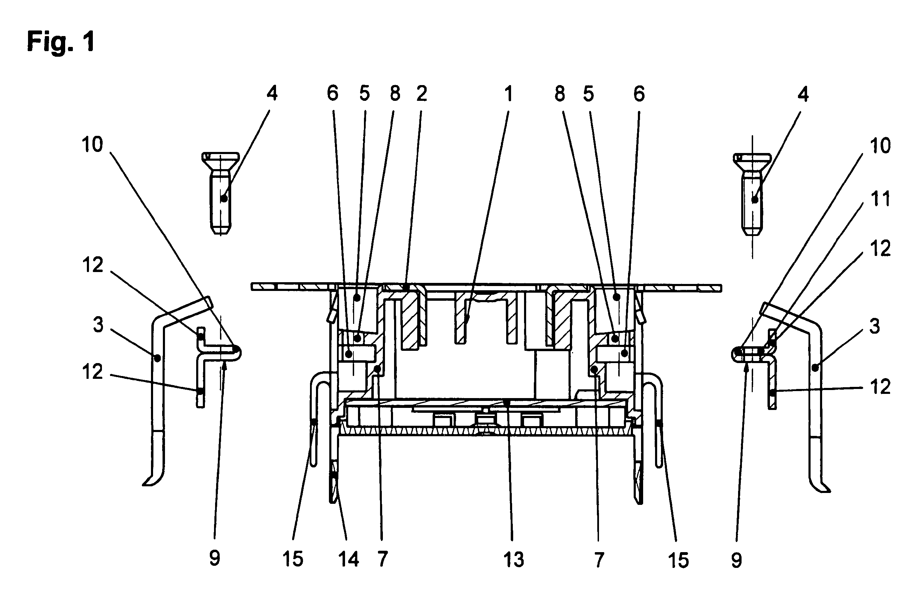

- Fig. 1:: prinziphaft ein solches elektrisches/elektronisches Installationsgerät in Explosionsdarstellung;

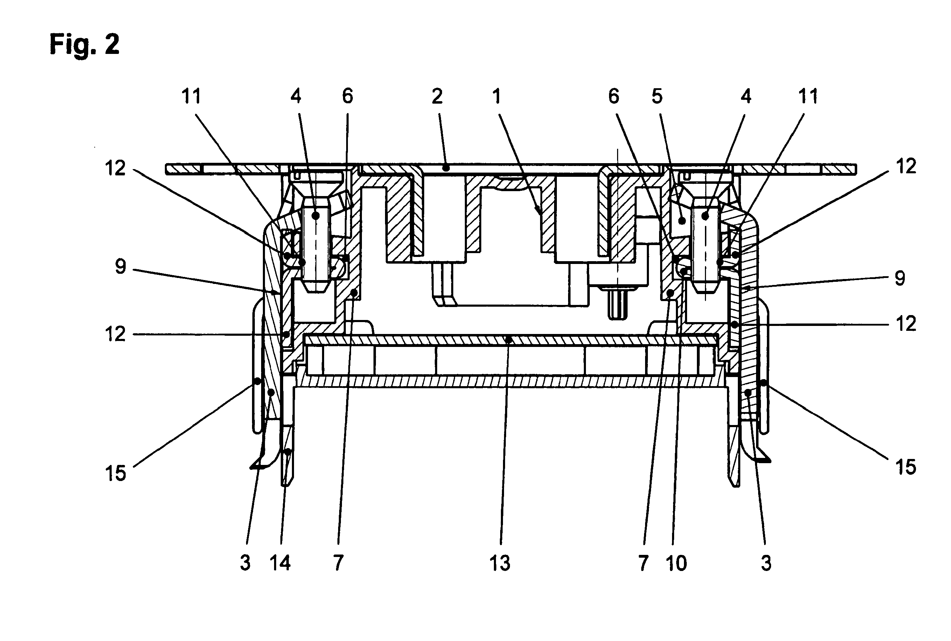

- Fig. 2:: prinziphaft einen Zusammenbau eines solchen elektrischen/elektronischen Installationsgerätes im Vollschnitt.

Wie aus den Figuren hervorgeht, besteht ein solches elektrisches/elektronisches Installationsgerät im Wesentlichen aus einem aus Kunststoff bestehenden, zur Aufnahme von Funktionselementen vorgesehenen Gehäuse 1, an welchem ein Träger 2 und zwei jeweils eine Einspreizkralle 3 und eine Einspreizschraube 4 aufweisende Befestigungseinrichtungen festgelegt sind. Das Gehäuse 1 weist zur Aufnahme jeder der beiden Befestigungseinrichtungen eine Ausnehmung 5 auf, welche in dieses eingeformt ist.

Wie des weiteren aus den Figuren hervorgeht, ist unterhalb jeder Ausnehmung 5 eine sich quer zur Längsterstreckung der zugeordneten Einspreizschraube 4 verlaufende Aufnahmetasche 6 in die Außenwand 7 des Gehäuses 1 eingeformt. In die Aufnahmetasche 6 ist jeweils eine dem Kopf der zugeordneten Einspreizschraube 4 zugewandter Durchbruch 8 in die Wandung der Aufnahmetasche 6 eingeformt, der zur Einführung der Einspreizschraube 4 dient. Jede der beiden Befestigungseinrichtungen weist ein T-förmig ausgebildetes Halteelement 9 auf, dessen zur Einführung in die Aufnahmetasche 6 vorgesehener Basisschenkel 10 mit einer Gewindebohrung 11 zur Kooperation mit der Einspreizschraube 4 versehen ist. An dem Basisschenkel 10 sind zwei quer zu diesem verlaufende Kopfschenkel 12 angeformt, welche abstützend an der Außenwand 7 des Gehäuses 1 zur Anlage kommen. Im Gehäuse 1 ist ein als Leiterplatte 13 ausgeführtes Funktionselement gehalten. Zum Schutz der Leiterplatte 13 und der -der Einfachheit halber nicht näher dargestellten- weiteren Funktionselemente ist das Gehäuse 1 an seiner Oberseite weitgehend geschlossen ausgeführt und an seiner Unterseite mit einer Gehäusekappe 14 verschlossen. An der Oberseite des Gehäuses 1 ist ein als Tragplatte ausgeführter Träger 2 festgelegt, welcher je nach Ausführungsform des elektrischen/elektronischen Installationsgerätes auch als Tragring ausgeführt sein kann. Da die Leiterplatte 13 derartige Abmessungen aufweist, so dass diese mit ihren Außenkanten an den Innenwandungen des Gehäuses 1 zur Anlage kommt, stellt dieser Gehäusebereich den stabilsten Gehäusebereich des Gehäuses 1 dar. Um die Montage des elektrischen/elektronischen Installationsgerätes möglichst zu vereinfachen, sind an die Außenwand 7 des Gehäuses 1 zwei Federstege 15 angeformt. Jeder Federsteg 15 kommt übergreifend an einer Einspreizkralle 3 zur Anlage, damit diese bei der Montage nicht störend absteht.

## Patentansprüche

1. Elektrisches/elektronisches Installationsgerät für die Gebäudesystemtechnik mit einem aus Kunststoff bestehenden, zur Aufnahme von Funktionselementen vorgesehenen Gehäuse, an welchem ein Träger und zumindest eine, eine Einspreizkralle und eine Einspreizschraube aufweisende Befestigungseinrichtung festgelegt sind und wobei im Gehäuse zur Aufnahme für jede Befestigungseinrichtung eine Ausnehmung vorhanden ist, **dadurch gekennzeichnet, dass** unterhalb jeder Ausnehmung (5) eine quer zur Längsterstreckung der Einspreizschraube (4) verlaufende Aufnahmetasche (6) in die Außenwand (7) des Gehäuses (1) eingeformt ist, und dass die dem Kopf der Einspreizschraube (4) zugewandte Wandung der Aufnahmetasche (6) einen Durchbruch (8) zur Einführung der Einspreizschraube (4) aufweist, und dass jede Befestigungseinrichtung ein T-förmig ausgebildetes Halteelement (9) aufweist, dessen zur Einführung in die Aufnahmetasche (6) vorgesehener Basisschenkel (10) mit einer Gewindebohrung (11) zur Kooperation mit der Einspreizschraube (4) versehen ist, und dass die beiden quer zum Basisschenkel (10) angeordneten Kopfschenkel (12) abstützend an der Außenwand (7) des Gehäuses (1) zur Anlage kommen.

2. Elektrisches/elektronisches Installationsgerät nach Anspruch 1, **dadurch gekennzeichnet, dass** die Kopfschenkel (12) des T-förmigen Halteelementes (9) unterschiedliche Längen aufweisen.

3. Elektrisches/elektronisches Installationsgerät nach einem der Ansprüche 1 oder 2, **dadurch gekennzeichnet, dass** das T-förmige Halteelement (9) als Stanz-Biegeteil ausgeführt und aus Metall hergestellt ist.

4. Elektrisches/elektronisches Installationsgerät nach einem der Ansprüche 1 bis 3, **dadurch gekennzeichnet, dass** der Basisschenkel (10) des T-förmigen Halteelementes (9) doppelt so dick wie die Kopfschenkel (12) ausgeführt ist.

5. Elektrisches/elektronisches Installationsgerät nach einem der Ansprüche 1 bis 4, **dadurch gekennzeichnet, dass** zumindest ein, die Einspreizkrallen (3) übergreifender Federsteg (15) an die Außenwand (7) des Gehäuses (1) angeformt ist.

## Claims

1. Electrical/electronic installation device for use in building system engineering having a housing made of plastic which is intended for accommodating functional elements and on which a support and at least one fastening constituent featuring an expanding claw and an expanding screw are positioned, and with a recess for receiving each fastening device being provided in the housing, **characterised in that** a receiving pocket (6) running at right angles to the longitudinal span of the expanding screw (4) is moulded into the outer wall (7) of the housing (1) below each recess (5), and that the wall of the receiving pocket (6) facing the head of the expanding screw (4) has a cut-out (8) for the purpose of inserting the expanding screw (4), and that each fastening constituent has a retention element (9) of a T-shaped design whose base member (10) intended for inserting into the receiving pocket (6) is provided with a threaded hole (11) for the purpose of cooperating with the expanding screw (4), and that the two head members (12) located transversely to the base member (10) come to rest on the outer wall (7) of the housing (1) in a supporting manner.

2. Electrical/electronic installation device in accordance with Claim 1, **characterised in that** the head members (12) of the T-shaped retention element (9) are of different lengths.

3. Electrical/electronic installation device in accordance with Claim 1 or Claim 2, **characterised in that** the T-shaped retention element (9) is executed as a stamped, bent component and is made of metal.

4. Electrical/electronic installation device in accordance with any of Claims 1 to 3, **characterised in that** the base member (10) of the T-shaped retention element (9) is double the thickness of the head member (12).

5. Electrical/electronic installation device in accordance with any of Claims 1 to 4, **characterised in that** at least one spring bar (15) extending over the expanding claws (3) is moulded onto the outer wall (7) of the housing (1).

## Revendications

1. Appareil d'installation électrique/électronique pour les installations techniques systémiques des bâtiments et la domotique, comportant un boîtier en plastique prévu pour l'accueil d'éléments fonctionnels, boîtier sur lequel sont fixés un support et au moins un dispositif de fixation, lequel présente une griffe à expansion et une vis à expansion, le boîtier présentant un évidement pour l'accueil de chaque dispositif de fixation, **caractérisé en ce que** est formée dans la paroi extérieure (7) du boîtier (1), au-dessous de chaque évidement (5), une poche d'accueil (6) de sens perpendiculaire à la direction longitudinale de la vis à expansion (4), et **en ce que** la paroi de la poche d'accueil (6) tournée vers la tête de la vis à expansion (4) présente une percée (8) permettant d'introduire la vis à expansion (4), et **en ce que** chaque dispositif de fixation présente un élément de maintien (9) formé en T, dont la branche de base (10), prévue pour être introduite dans la poche d'accueil (6), est munie d'un alésage fileté (11) coopérant avec la vis à expansion (4), et **en ce que** les deux branches supérieures du T (12) perpendiculaires à la branche de base (10) viennent s'appuyer contre la paroi extérieure (7) du boîtier (1).

2. Appareil d'installation électrique/électronique selon la revendication 1, **caractérisé en ce que** les branches supérieures (12) de l'élément de maintien en T (9) sont de longueurs différentes.

3. Appareil d'installation électrique/électronique selon l'une des revendications 1 ou 2, **caractérisé en ce que** l'élément de maintien en T (9) est réalisé en pièce emboutie pliée et est fabriqué en métal.

4. Appareil d'installation électrique/électronique selon l'une des revendications 1 à 3, **caractérisé en ce que** la branche de base (10) de l'élément de maintien en T (9) est deux fois plus épaisse que les branches supérieures (12).

5. Appareil d'installation électrique/électronique selon l'une des revendications 1 à 4, **caractérisé en ce que** au moins une baguette ressort (15) prenant sur les griffes à expansion (3) est formée sur la paroi extérieure (7) du boîtier (1).
